Europäisches Patentamt

European Patent Office

Office européen des brevets

(11) Publication number: **0 670 659 A2**

# EUROPEAN PATENT APPLICATION

(21) Application number: 95102901.6

(51) Int. Cl.6: **H04N 5/74**

(22) Date of filing: **01.03.95**

(30) Priority: **03.03.94 JP 33864/94**

(43) Date of publication of application:
**06.09.95 Bulletin 95/36**

(84) Designated Contracting States:
**DE FR GB**

(71) Applicant: **PIONEER ELECTRONIC CORPORATION**
**No. 4-1, Meguro 1-chome**
**Meguro-ku**
**Tokyo 153 (JP)**

(72) Inventor: **Yoshioka, Takayuki, c/o Pioneer Ohmori Plant**
**15-5, Ohmori-Nishi 4-chome,**
**Ohta-ku**
**Tokyo (JP)**
Inventor: **Nitta, Akira, c/o Pioneer Ohmori Plant**
**15-5, Ohmori-Nishi 4-chome,**
**Ohta-ku**
**Tokyo (JP)**

Inventor: **Wagatsuma, Saori, c/o Pioneer Ohmori Plant**
**15-5, Ohmori-Nishi 4-chome,**
**Ohta-ku**
**Tokyo (JP)**
Inventor: **Onuma, Tatsuro, c/o Pioneer Ohmori Plant**
**15-5, Ohmori-Nishi 4-chome,**
**Ohta-ku**
**Tokyo (JP)**
Inventor: **Ozaki, Yukio, c/o Pioneer Ohmori Plant**
**15-5, Ohmori-Nishi 4-chome,**
**Ohta-ku**
**Tokyo (JP)**

(74) Representative: **Klingseisen, Franz, Dipl.-Ing. et al**
**Patentanwälte,**
**Dr. F. Zumstein,**
**Dipl.-Ing. F. Klingseisen,**
**Bräuhausstrasse 4**
**D-80331 München (DE)**

(54) **Magnifying observation apparatus with a concave mirror.**

(57) A magnifying observation apparatus comprising an image display section 13, a magnifying section 12 for projecting and magnifying an image displayed on the image display section, and an observation window 11a formed in a portion of the housing for observation of an image projected and magnified by the magnifying section, wherein a variable light transmission section 19 allowing changes of a transmittance or a diffusion coefficient of incident light is provided in a light path from the observation window 11a to the image display section 13. With this feature, the magnifying observation apparatus can naturally prevent the incident light from being focused in the apparatus and insure desired functions and characteristics.

FIG.2

## BACKGROUND OF THE INVENTION

### 1. FIELD OF THE INVENTION

The present invention relates to a magnifying observation apparatus which enables magnification of an image on an image displaying apparatus so that an observer can observe the magnified image.

### 2. PRIOR ART

There has been known a magnifying observation apparatus, such as one used in a video game system or the like, in which projection of a displayed image is magnified and observed using an image display device such as a CRT or the like and a concave mirror.

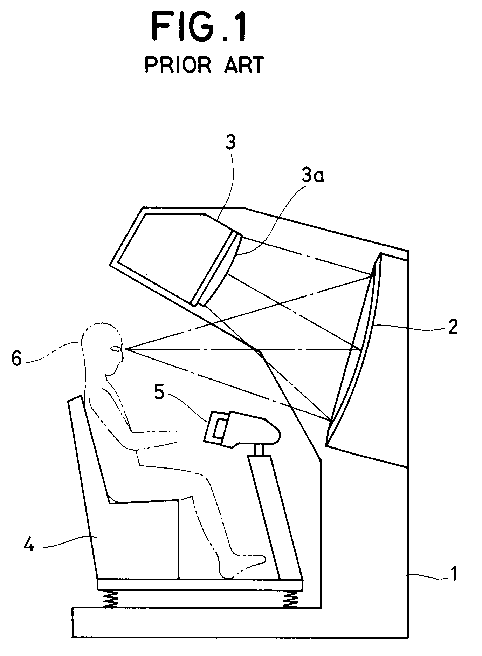

As an example of the magnifying observation apparatus as described above, there is a game system as shown in Fig. 1. In this game system, a concave lens 2 and a display device 3 are located and fixed at opposite positions on a base 1, and an operator 6 sitting on a seat 4 can play game by operating an operating section 5 while observing an image projected on the concave mirror.

When transporting a magnifying observation apparatus to a specified site for installation, if the apparatus is mounted directly on a loading platform of a vehicle, sunlight may come into the concave mirror 2 in a case where a direction in which the apparatus is mounted is suited for it, be focused and reflected to a display surface 3a of the display device 3, which may in turn cause deterioration of the characteristics or give damages to the inside thereof.

Conventionally to overcome this problem, when transporting the apparatus as described above, a suited material such as black cloth is put on the apparatus to cover the entire apparatus so that sunlight does not come into the apparatus.

However, when the countermeasures as described above is employed, the work related to transportation of the apparatus becomes very complicated, and sometimes the apparatus may be left outdoors and exposed to the sunlight during a time other than that for transportation, even in that case as described above, it is necessary to prevent the apparatus from being damaged by sunlight introduced thereinto.

### OBJECTS AND SUMMARY OF THE INVENTION

The present invention was made in the light of the circumstances as described above, and it is an object of the present invention to provide a magnifying observation apparatus which can prevent sunlight from being focuses inside the apparatus even when the apparatus is exposed to sunlight or the like thereby insuring desired functions and characteristics.

The magnifying observation apparatus according to the present invention comprises a display section having an image displaying surface, a magnifying section for magnifying projection of an image displayed on the image displaying surface, a housing in which the displaying section and the magnifying sections are mounted, and an observation window formed in a portion of the housing for observing an image through the magnifying section, wherein a variable light-transmissible section in which a transmission factor and/or a diffusion coefficient for an incident ray can be changed in light path from the observation window up to the display section.

Also the magnifying observation apparatus according to the present invention is characterized in that the variable light-transmissible section is located in a light path for an incident path in the upstream from the magnifying section.

Also the magnifying observation apparatus according to the present invention is characterized in that the variable light-transmissible section is made of photo-chromic material.

Also the magnifying observation apparatus according to the present invention is characterized in that the light-transmissible section comprises a liquid crystal panel and has a light detecting section for receiving an incident light and transmitting a signal and a control means for controlling transmission characteristics of the liquid crystal panel in response to the signal.

Also the magnifying observation apparatus according to the present invention is characterized in that the magnifying section comprises a concave mirror having a reflecting surface on a rear surface thereof and also the variable light-transmissible section is provided on a front surface section of the concave mirror.

Furthermore the magnifying observation apparatus according to the present invention is characterized in that, in a concave mirror having a front surface and a rear surface with a reflecting surface made of a metallic film provided on the rear surface thereof, a layer containing photo-chromic material is provided on the front surface.

In the magnifying observation apparatus according to the present invention, a variable light-transmissible section in which a transmission factor and/or a diffusion coefficient for an incident light can be changed is provided in a light path from an observation window up to an image displaying section, so that, even if light having a high energy level such as sunlight comes through the observation window formed in a portion of the housing into the apparatus, a quantity of the light transmitted through the light-transmissible section as described above decreases and the light is diffused. For this reason, even if light passes through a magnifying section, the light will never be focused locally at a high energy level, and an object to be observed may not be seen because an abnormal state has occurred. On the other hand, if installed normally, a virtual image of an image on an image display section can be observed through an observation window.

BRIEF DESCRIPTION OF THE DRAWINGS

Fig.1 is a general side view of a conventional type of magnifying observation apparatus;

Fig.2 is a general corss-sectional view illustrating one embodiment of a magnifying observation apparatus according to the present invention;

Fig.3 is a general cross-sectional view illustrating another embodiment of the magnifying observation apparatus according to the present invention;

Fig.4 is a driving circuit diagram illustrating a case where a liquid crystal panel is used as a variable light-transmissible section according to the present invention;

Fig.5 is a general cross-sectional view illustrating still another embodiment of the magnifying observation apparatus according to the present invention;

Fig.6 is a general cross-sectional view illustrating a different embodiment of the magnifying observation apparatus according to the present invention;

Fig.7 is a general cross-sectional view illustrating a further different embodiment of the magnifying observation apparatus according to the present;

Fig.8 is a general cross-sectional view illustrating a still further different embodiment of the magnifying observation apparatus; and

Fig.9 is a view illustrating an optical system for explanating a positional relation between an image displaying surface and a concave mirror according to the present invention.

DETAILED DESCRIPTION OF THE INVENTION

Description is made hereinafter for embodiments of a magnifying observation apparatus according to the present invention with reference to the related drawings.

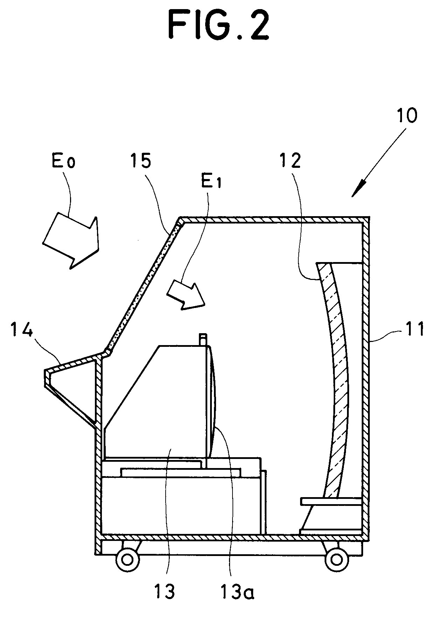

Fig.2 shows one embodiment of the magnifying observation apparatus. As shown in this figure, located in a basic body of a casing for the apparatus are an image displaying apparatus 13 such as a CRT for displaying a desired image and a concave mirror 12 opposing this image displaying surface 13a. Also provided on the upper side section of the basic body of the casing 11 is an observation window 15, so that an observer (an operator) can see a displayed image projected toward the concave mirror 12 through this observation window as a virtual image magnified toward the rear side of the concave mirror.

In the present embodiment, the observation window 15 is formed with a light-adjusting panel as a variable light-transmissible section in which such functions as a transmission factor of light can changes reversibly according to a quantity of sunlight or the like. As a concrete examples of the light-adjusting panel as described above, for instance, what is prepared by using photochromic materials having a changeable transmission factor such as heteropoly-tungstic acid, flugido compounds, spiropyran, spirooxazine, or photochromic glass can be listed.

By forming the observation window 15 with a light-adjusting panel photochromics as described above, when sunlight $E_0$ or the like comes into this panel, a light shuttering effect occurs, and a quantity of light $E_1$ transmitting the panel and coming into inside of the apparatus decreases. For this reason, even if a material of the image displaying surface 13a is glass or plastics, or even if the image displaying device 13 is made of wood, a galvanized iron plate, or vinyl material, the surface is not damaged.

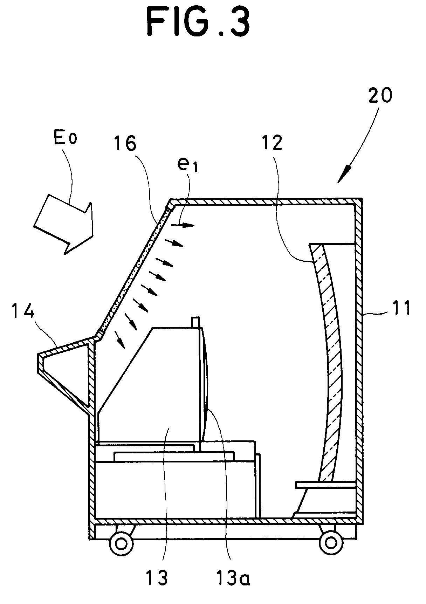

In the embodiment shown in Fig.3, in contrast to the embodiment shown in Fig.2, an observation window 16 is formed with a light-adjusting panel, in which a diffusion coefficient can reversibly change, to make light having transmitted the panel diffused light $e_1$ when sunlight $E_0$ or the like is irradiated.

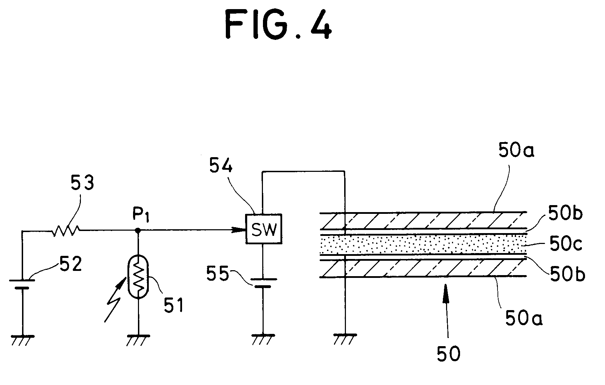

A panel made of liquid crystal material or the like can be used as a light-adjusting panel which can changes the transmission factor or diffusion coefficient reversibly. Concretely, as shown in Fig.4, a Cds cell 51 as a light sensing means, a control power supply 52, a resistor 53, a switch 54, and a driving power supply 55 are connected using a liquid crystal panel 50 comprising a layered construction in which a liquid crystal light-adjusting sheet MU 50c is held between a transparent electrode 50b and a glass plate 50a as shown in the figure. With the circuit as described above, when sunlight is irradiated to the Cds cell 51, a voltage at the point P1 drops, and the switch 54 is turned ON. Upon this switch 54 turned ON, a voltage by the driving power supply 55 is loaded to between the liquid crystal light-adjusting sheets UMU 50c to change the molecular orientation so that transmitting light is reduced or diffused. With this a quantity of light reaching the concave mirror can be suppressed, and such factor as an orientation can be adjusted. It should be noted that, when the apparatus is not used because, for instance, it is being transported, the power supply is OFF and the safety is maintained. Also a light-receiving transistor or a photodiode may be used as the light sensing means.

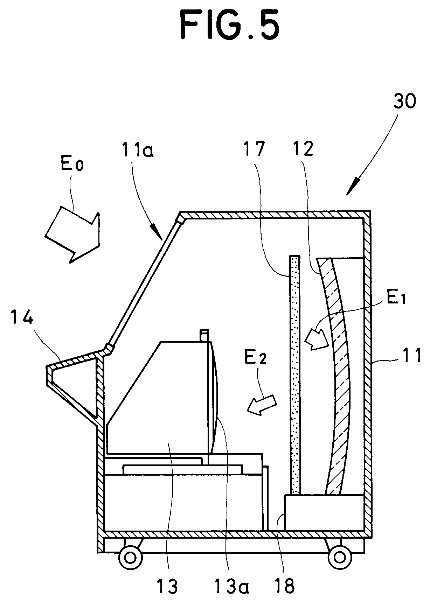

In the embodiment shown in Fig.5, a light-adjusting panel 17 is fixed not on the observation window 11a but on a base 18 in a light path between the display surface 13a of the image displaying apparatus 13 and the concave section 12 as well as in that between the observation window 11a and the concave mirror 12. With the configuration as described above, when sunlight $E_0$ comes into inside of the apparatus through the observation window 11a, light $E_1$ having passed through the light-adjusting panel 17 is reflected by the concave section 12, and again passes through the light-adjusting panel 17 to become transmitted light $E_2$. In this light path, the sunlight $E_0$ is reduced in its quantity or diffused twice, so that a quantity of light reaching the display surface 13a of the image displaying device 13 becomes smaller, whereby effect by incident ray over the displaying surface 13a or the like is reduced as much as possible. It should be noted that herein the concept of observation window includes a state in which a transparent glass sheet or the like is provided in a window section or a window section is simply an opening.

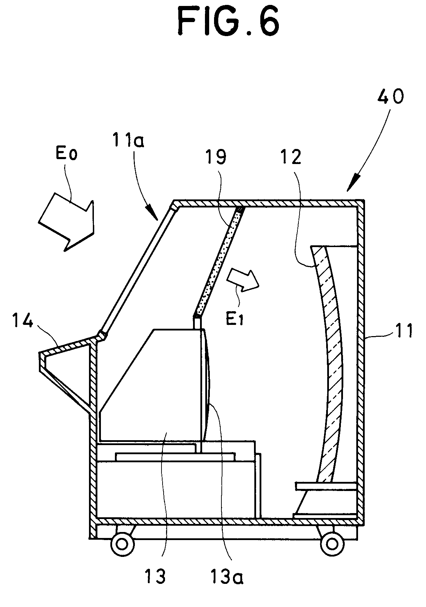

In an embodiment shown in Fig.6, a light-adjusting panel 19 is provided in a light path between the observation window 11a and the concave section 12. In this configuration as described above, when the apparatus transmitted or removed, as compared to a case where a light-adjusting panel is provided in the observation window 11a, even if a basic body of the apparatus is collided to other members by mistake, as the light-adjusting panel is loaded in a basic body of the casing 11, so that damages thereto can be prevented as much as possible.

Also the light-adjusting panel is located in a path through which sunlight comes into the apparatus in the upstream side from the concave mirror 12, namely in the side where the sunlight comes in, a quantity of light reaching the image display device 13 or the like can efficiently be reduced like in a case where the light-adjusting panel is provided in the observation window 11a.

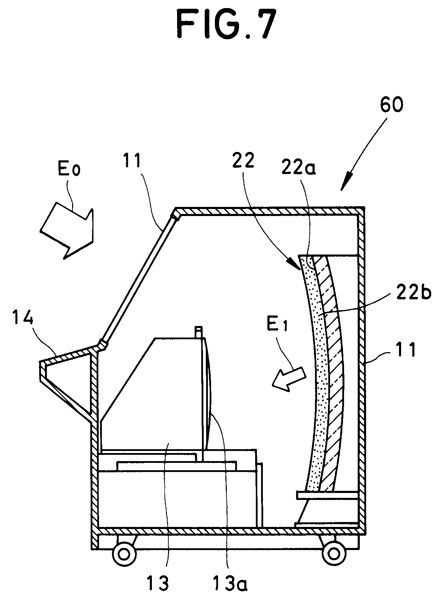

In an embodiment shown in Fig.7, a separate light-adjusting panel like that in the embodiment shown in Fig.6 is not provided, but a rear surface mirror 22 having a reflecting surface 22a coated with material such as aluminium or silver by means of deposition on its rear side is employed as a concave mirror, and a front surface of this rear surface mirror is formed with glass or plastic materials 22b or the like with photochromic material mixed therein. Namely the photochromic material plays a role as a light-adjusting panel. In this case, a rear surface of the glass material may be used as the reflecting surface 22a with a surface of the glass material coated and solidified with a coating liquid containing a heteropoly-tungsten acid which is a water-soluble inorganic photochromic material.

With the configuration as described above, when sunlight $E_0$ comes into the apparatus, the sunlight $E_0$ passes through a layer of photochromic material formed on a front surface of the rear surface mirror 22 and reaches the reflecting surface 22a, when it again passes through the photochromic material layer, and is projected as transmitted light $E_1$ toward the display surface 13a.

Thus incident light coming into the apparatus is required to pass through the photochromic material layer as a light-adjusting panel twice, and energy of the light is furthermore attenuated due to the dual light beam path, so that a quantity of light reaching the image display device 13 is substantially smaller than that of the sunlight $E_0$. In contrast, if there is no sunlight, transparency of the photochromic material is maintained, so that a virtual image can be observed under a large quantity of light and at a high clearness.

For this reason, as compared to the configuration shown in Fig.2 through Fig.6, a more effective effect for reducing a quantity of light (light energy) can be achieved.

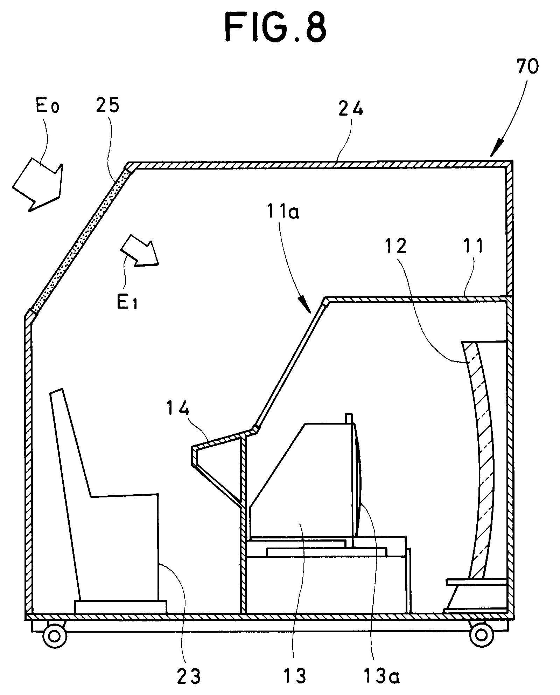

In an embodiment shown in Fig.8, a magnifying observation apparatus as shown in Fig.2 through Fig.7 is provided in a capsule forming a magnifying observation apparatus as a whole.

As shown in this figure, an apparatus with the concave mirror 12, the image display device 13 or the like located and accommodated in a basic body of the casing 11 is furthermore located and accommodated in a basic body of capsule 24 with a seat 23 for an observer (operator) provided, and these components form a magnifying observation apparatus as a whole.

Also provided in the upper side of the basic body of capsule 24 is an observation window 25 so that an observer can visually check a displayed image therein from outside of the basic body 24. This observation window 25 is formed with a light-adjusting panel as described above which can reversibly change a transmittance or a diffusion coefficient when the sunlight comes in.

With the configuration as described above, the sunlight $E_0$ changes to the transmitted light $E_1$ having a smaller quantity of light energy after passing through the observation window (light-adjusting panel) 25 provided in the basic body 24 of capsule, and the same effect as that in the embodiment described above can be achieved.

As described above, by providing a light-adjusting panel which can lower, when light having a high energy level such as sunlight passes therethrough, the transmittance factor or make larger the diffusion coefficient as a light-adjusting panel at an observation window sector or in a light path between an observation window and a display surface of an image display device, it is possible to reduce a quantity of light coming into the apparatus, or to prevent the incident light from being focused by a concave mirror causing local concentration of energy, and as a result it is possible to prevent components of the apparatus from being deteriorated or broken.

Next description is made for a positional relation between a concave mirror and a display surface of an image display surface designed taking into considerations an energy density of incident light on a surface of an object in the magnifying observation apparatus as described above.

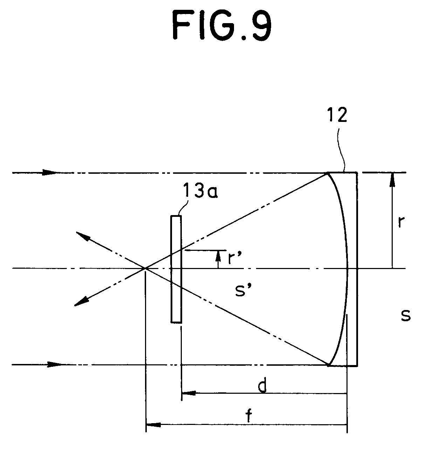

As shown in Fig.9, an optical system with the concave mirror 12 and display surface 13a located at opposite positions are designed so that parallel light (sunlight) is reflected by the concave mirror 12 and is introduced onto the display surface 13a.

Herein r and s indicate a radius and an area of incident light in the concave mirror 12 respectively, while r' and s' indicates a radius and an area of spot light on the display surface 13a respectively. Also d indicates a distance between the concave mirror 12 and the display surface 13a, while f indicates a focus length of the concave mirror 12.

Herein an energy density of light on the display surface 13a is obtained through the following equation;

$$\text{Energy density of light} = E_0 \times S/S'$$

herein $E_0$ is energy of incident light. On the other hand, the following relation is obtained from Fig.9;

$$r/f = r'/(f - d)$$

so that, a density ratio (area ratio) $S_R$ is expressed by the following expression;

$$S_R = \frac{S}{S'} = \frac{r^2 \times \pi}{r'^2 \times \pi} = \frac{1}{(1 - d/f)^2}$$

So by appropriately selecting a positional relation between a concave mirror and a display surface or various dimensions for setting the area ration $S_R$ at a specified value ($\lambda$) or less, it is possible to suppress a quantity of light energy being focused on an image display device, thus preventive effects such as prevention of performance deterioration being obtained.

Also it is an effective technic to select various dimensions and a positional relation for satisfying the following expression, taking into considerations the concept of area ratio ($S_R$) as described above, a transmittance T of the light-adjusting panel, and a reflection factor R of a concave mirror;

$$\frac{1}{(1 - d/f)^2} \times R \times T \le \lambda_1$$

wherein the are ration $S_R$ is suppressed below a specified value ($\lambda_1$).

Description above for embodiments of a magnifying observation apparatus assumes a case where the apparatus includes a concave mirror or a rear surface mirror as a reflecting mirror and an image display apparatus such as a CRT as an image display section, but it is needless to say that the light-adjusting panel according to the present invention can be applied to a magnifying observation apparatus in which a magnifying lens is used in place of a reflecting mirror and a device for displaying static images other than a CRT for displaying moving images is used as an image display device. In this case, such a component as a magnifying lens itself may have the light adjusting function. For instance, in case of a magnifying observation apparatus using a Fresnel lens, if this Fresnel lens is prepared with material containing a light-adjusting material, such as, for instance, spirooxazine which is a photochromic material, it is possible to protect the observation apparatus, and in addition handling of the apparatus is quite easy.

Also description of the embodiments above assumes an apparatus having an operating section for an observer to make observation operating it, but an apparatus only for observation and not having an operation section is naturally included in the magnifying observation apparatus according to the present invention.

As described above, with the magnifying observation apparatus according to the present invention, as a variable light transmission section which allows changes of a transmittance or a diffusion coefficient of incident light is provided in a light path from an observation window to an image display surface, it is possible to reduce a quantity of light reaching such components as an image display section, which in turn makes it possible to prevent a display device or the like from being deteriorated in terms of performance thereof or being broken.

## Claims

1. A magnifying observation apparatus comprising

   a display section having an image display surface;

   a magnifying section for magnifying a projected image displayed on said image display surface;

   a housing in which said display section and the magnifying section are located; and

   an observation window formed in a portion of said housing for observing an image through said magnifying section;

   wherein a variable light transmission section allowing changes of a transmittance and/or a diffusion coefficient of incident light is provided in a light path from said observation window to said display section.

2. A magnifying observation apparatus according to Claim 1, wherein said variable light transmission section is provided in a light path for incident light in the upstream side from said magnifying section.

3. A magnifying observation apparatus according to Claim 1, wherein said variable light transmission section is formed with a photochromic material.

4. A magnifying observation apparatus according to Claim 2, wherein said variable light transmission section is formed with a photochromic material.

5. A magnifying observation apparatus according to Claim 1, wherein said variable light-transmissible section comprises a liquid crystal panel and has a light detecting means for receiving incident light and emitting a signal and a control means for controlling the transmission characteristics of said liquid crystal panel according to said signal.

6. A magnifying observation apparatus according to Claim 2, therein said variable light-transmissible section comprises a liquid crystal panel and has a light detecting means for receiving incident light and emitting a signal and a control means for controlling the transmission characteristics of said liquid crystal panel according to said signal.

7. A magnifying observation apparatus according to any of Claims 1, 3, 4, 5 and 6, wherein said magnifying section comprises a concave section having a reflecting surface on a rear surface thereof and said variable light transmission section is provided on a front surface section of said concave mirror.

8. A concave mirror having a front surface as well as a rear surface and also has a reflecting surface made of a metallic film on the rear surface thereof, wherein a layer containing a photochromic material is provided on said front surface thereof.

# FIG.1
## PRIOR ART

# FIG.2

# FIG.3

# FIG.4

# FIG.5

# FIG.6

# FIG.7

# FIG.8

# FIG.9